# EUROPÄISCHE PATENTSCHRIFT

(11) **EP 1 339 079 B1**
(45) Veröffentlichungstag und Bekanntmachung des Hinweises auf die Patenterteilung: **09.05.2007**
(21) Anmeldenummer: 03450047.0
(22) Anmeldetag: 20.02.2003
(51) Int. Cl.: H01H 11/04

(54) **Verfahren und Vorrichtung zum aufschweissen von elektrischen Kontakten**
Process and arrangement for welding an electrical contact
Procédé et disposition pour le soudage d'un contact életrique

(30) Priorität: 21.02.2002 AT 2702002
(43) Veröffentlichungstag der Anmeldung: 27.08.2003
(73) Patentinhaber: Stanzbiegetechnik Ges.M.B.H., 2752 Wöllersdorf (AT)
(72) Erfinder: Buxbaum, Peter, Ing., 2752 Wöllersdorf (AT); Buxbaum, Karl, 2752 Wöllersdorf (AT)
(74) Vertreter: Babeluk, Michael

(56) Entgegenhaltungen:
- WO-A-98/12723
- DE-A- 2 421 557
- DE-A- 19 529 981
- DE-C- 19 528 273

## Beschreibung

Die vorliegende Erfindung betrifft ein Verfahren gemäß dem Oberbegriff von Patentanspruch 1.

Es ist bekannt, Kontaktelemente, wie etwa Mikroschalter dadurch herzustellen, dass Kontaktabschnitte auf ein entsprechend ausgebildetes Trägerband aufgeschweißt werden, wonach die Kontaktträger vom Trägerband abgetrennt werden. Für den Schweißvorgang wird dabei ein Schweißverfahren verwendet, bei dem das Trägerband zwischen zwei Schweißelektroden hindurchgeführt wird, wobei bei bekannten Verfahren eine dieser Schweißelektroden fest und die andere beweglich ist. In eine der Schweißelektroden wird ein Kontaktabschnitt eingelegt und von der Elektrode auf das Trägerband aufgepresst und durch elektrische Widerstandsschweißung mit diesem fest verbunden. Ein solches Verfahren ist beispielsweise in der DE 195 28 273 C oder der DE 195 29 981 A beschrieben. Auf diese Weise ist es möglich, mit großer Genauigkeit und Effizienz Kontaktelemente herzustellen, die auf einer Seite des Kontaktträgers einen Kontakt aufweisen.

In bestimmten Fällen ist es jedoch erforderlich, dass der Kontaktträgerabschnitt beidseitig einen Kontakt aufweist. Um solche Kontaktelemente herzustellen, werden nach bekannten Verfahren zunächst die Kontakte auf einer Seite aufgebracht und in einem nachfolgenden Schritt in analoger Weise die Kontakte auf der gegenüberliegenden Seite angeschweißt. Es hat sich jedoch herausgestellt, dass die Synchronisierung und die genaue Positionierung bei solchen Verfahren und Vorrichtungen sehr schwierig ist, und dass die vorgegebenen Toleranzen schwer einzuhalten sind. Dies ist unter anderem eine Folge der kleinen Abmessungen der betreffenden Bauteile, die im Bereich weniger Millimeter bei den Kontaktträgerabschnitten und im Bereich von Bruchteilen von Millimetern bei den Kontaktabschnitten selbst betragen.

Die DE 34 41 013 C zeigt ein Verfahren zum elektrischen Anschweißen von Anschlussdrähten an die Stirnflächen von Kondensatorwickeln. Ein solches Verfahren ist jedoch nicht mit dem Aufschweißen von elektrischen Kontakten auf ein Trägerband vergleichbar.

Aufgabe der vorliegenden Erfindung ist es, diese Nachteile zu vermeiden und ein Verfahren und eine Vorrichtung anzugeben, mit dem beidseitig mit Kontakten versehene Kontaktträgerabschnitte und Kontaktelemente zuverlässig und effizient hergestellt werden können.

Diese Aufgaben werden erfindungsgemäß durch die Merkmale von Patentanspruch 1 gelöst.

Wesentlich an der Erfindung ist, dass die Kontaktabschnitte gleichzeitig und fluchtend auf das Trägerband aufgeschweißt werden, wodurch Positionierungsfehler der Kontakte gegeneinander zuverlässig ausgeschlossen werden können.

Ein weiterer Vorteil des erfindungsgemäßen Verfahrens besteht darin, dass die Verschweißung im Wesentlichen symmetrisch erfolgt, was die Einstellung erleichtert, und dass im Gegensatz zu bekannten Verfahren keine neuerliche Verschweißung eines in einem ersten Arbeitsschritt angeschweißten Kontaktabschnitts in einem weiteren Arbeitsschritt erfolgt.

Bei dem erfindungsgemäßen Verfahren handelt es sich darum, Mikroschalter herzustellen, die mit Kontakten aus hochbelastbaren Materialien versehen sind. Wesentlicher Erfindungsgedanke ist die gleichzeitige Verschweißung von zwei Kontaktabschnitten auf gegenüberliegenden Seiten des Bandes, wobei der Schweißstrom über die beiden Kontakte und durch das Trägerband hindurchgeführt wird.

In einer besonders begünstigten Ausführungsvariante des erfindungsgemäßen Verfahrens ist vorgesehen, dass jeder der beiden Kontaktabschnitte von einer Elektrode gehalten wird und dass die beiden Elektroden gleichzeitig von beiden Seiten zum Trägerband bewegt und auf dieses gepresst werden. Auf diese Weise kann eine Verformung des Trägerbandes weitgehend vermieden werden.

Eine weitere Variante der Erfindung sieht vor, dass das Abtrennen des Kontaktabschnitts durch ein Trennwerkzeug erfolgt und der abgetrennte Kontaktabschnitt durch einen Schieber in eine Ausnehmung der Elektrode eingeführt wird. Dies ermöglicht die Verwendung von profilierten Drähten und damit eine Optimierung des Schweißverfahrens durch präzisere Abschnitte.

Weiters betrifft die Erfindung eine Vorrichtung zum Aufschweißen von elektrischen Kontakten auf ein Trägerband zur Herstellung von Kontaktelementen mit einer Vorschubeinrichtung für ein Trägerband und mit einer Schweißeinrichtung zum Aufschweißen von Kontaktabschnitten. Erfindungsgemäß sind zwei einander gegenüberliegende Schweißeinrichtungen vorgesehen, zwischen denen ein Kanal zur Durchführung des Trägerbandes ausgebildet ist, die gleichzeitig betätigbar sind.

Vorzugsweise ist im Bereich der Schweißeinrichtung eine Abtrenneinrichtung vorgesehen, die dazu ausgebildet ist, den Kontaktabschnitt von einem Draht oder Profil abzutrennen.

Pilotierstifte, die unmittelbar neben den Elektroden angeordnet sind, stellen eine exakte Lagebeziehung zwischen dem Trägerband und den Elektroden her und ermöglichen die Einhaltung geringster Toleranzen.

Es kann durch Ungleichmäßigkeiten in den Profilen und durch Toleranzen und Abnutzung dazu kommen, dass ein einzelner Kontaktabschnitt nicht in die korrekte Position in der Elektrode gebracht wird. Wenn der Schweißvorgang dennoch ausgelöst wird, so hat dies in der Regel eine Beschädigung oder Zerstörung der Elektrode zur Folge, es kann aber auch das Trägerband so stark beschädigt werden, dass dieses neu eingespannt werden muss. Jedenfalls ist mit einer erheblichen Störung des Produktionsprozesses zu rechnen. Dieses Problem kann dadurch verhindert werden, dass eine Einrichtung zur Erfassung der Einlegeposition der Kontaktabschnitte vorgesehen ist. Vorteilhafterweise ist dabei die Einrichtung als Näherungssensor ausgebildet, der mit einem Annäherungskörper zusammenwirkt, der mit dem einzulegenden Kontaktabschnitt in Verbindung steht.

Weiters ist es günstig, wenn eine Steuerungseinrichtung zur Herstellung einer gleichzeitigen gegenläufigen Bewegung der Elektroden zum Trägerband vorgesehen ist.

In der Folge wird die Erfindung anhand der in den Figuren dargestellten Ausführungsvarianten näher erläutert. Es zeigen:
- Fig. 1: eine erfindungsgemäße Vorrichtung in einer seitlichen Ansicht und
- Fig. 2: ein Detail von Fig. 1 in vergrößertem Maßstab.

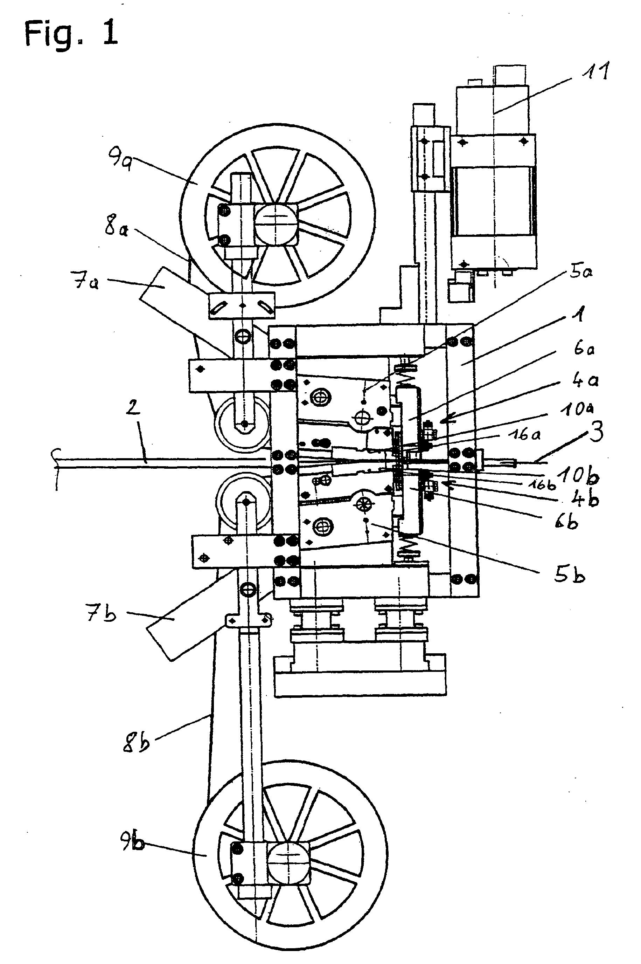

Die Vorrichtung von Fig. 1 besteht aus einem Rahmen 1, in dem ein Kanal 2 geführt ist, der ein Trägerband 3 aufnimmt. Oberhalb des Kanals 2 ist eine erste Schweißeinrichtung 4a angeordnet, während unterhalb eine zweite Schweißeinrichtung 4b mit analogem Aufbau angeordnet ist.

Jede der Schweißeinrichtungen 4a, 4b besteht aus einer Kassette 5a, 5b, die den Mechanismus zur Herstellung und zum Transport der Kontaktabschnitt und zur Bewegung der Schweißelektroden 16a, 16b enthält, die in abnehmbaren Elektrodenhalterungen 6a, 6b angeordnet sind. Jede der Schweißeinrichtungen 4a, 4b ist über einen Motor 7a, 7b angetrieben, der sämtliche Funktionen über Getriebe und Nockenmechanismen ansteuert.

Die Kontaktabschnitte werden aus Profilen 8a, 8b hergestellt, die von Spulen 9a, 9b abgerollt werden.

Die Profile 8a, 8b werden in der Folge in Kassetten 5a, 5b zugeführt, und zwar abnehmbar in an den Kassetten 5a, 5b angebrachten Kassetteneinheiten 10a, 10b, in denen die Vereinzelung erfolgt. Der Strom wird für die Verschweißung durch einen Schweißtransformator 11 zur Verfügung gestellt.

Durch die Ansteuerung der Schweißeinrichtungen 4a, 4b durch getrennte Motoren 7a, 7b ist es möglich, auf elektronischem Weg eine vollständige Synchronisierung der Bewegungen zu erreichen und gleichzeitig ebenfalls auf elektronischem Weg eine Synchronisierung mit vorgelagerten oder nachgelagerten Maschinen, wie etwa Stanzen zur Herstellung des Trägerbandes 3 zu erreichen.

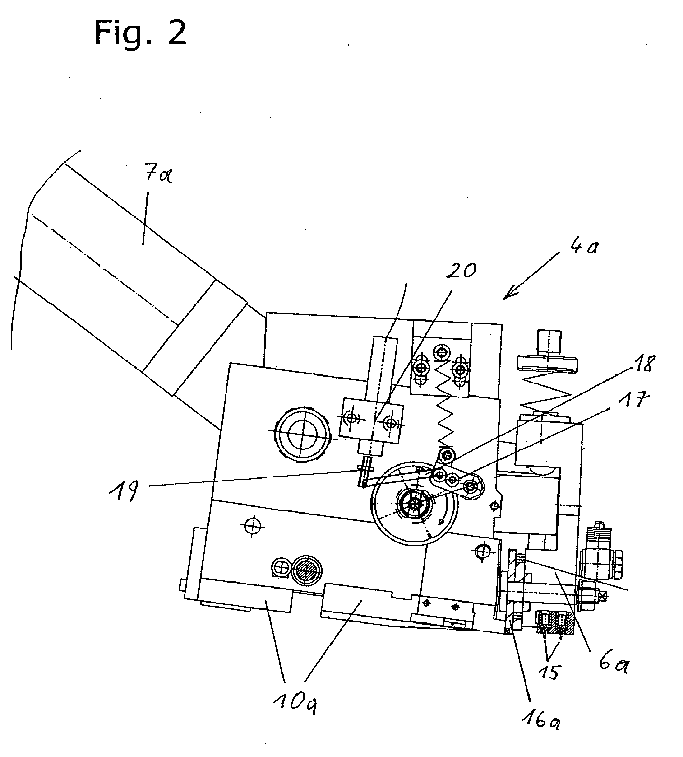

In Fig. 2 ist eine Schweißeinrichtung 4a nochmals in größerem Detail dargestellt. Im unmittelbaren Bereich der Elektroden 16a sind Pilotierstifte 15 vorgesehen, die in nicht dargestellte Ausnehmungen des Trägerbandes eingreifen und damit in hochgenauer Weise eine Justierung des Trägerbandes 3 in Bezug auf die Schweißeinrichtungen 4a, 4b herbeiführen. Weiters ist an der Schweißeinrichtung 4a ein Nocken mit Federzug vorgesehen, der über einen Mitnehmer 17 und einen Hebel 18 einen Annäherungskörper 19 hin und her bewegt. Der Nocken steht in direkter Verbindung mit dem Einlegemechanismus für die Kontaktabschnitte, so dass die Bewegung des Annäherungskörpers 19 direkt von der Position des jeweiligen Kontaktabschnittes abhängt. Über einen Näherungssensor 20 wird die Bewegung des Annäherungskörpers 19 elektronisch überwacht. Wenn nun ein abgeschnittener Kontaktabschnitt nicht in der vorgesehen Weise zur Elektrode 16a transportiert wird, dann kann dies durch die Bewegung des Annäherungskörpers 19 erfasst werden und eine Auslösung des Schweißvorganges unterbunden werden. Auf diese Weise kann eine Beschädigung der Elektroden durch fehlerhaft eingelegte Kontaktabschnitte zuverlässig verhindert werden.

## Patentansprüche

1. Verfahren zum Aufschweißen von elektrischen Kontakten auf ein Trägerband (3) zur Herstellung von Kontaktelementen o. dgl., bei dem in jedem Arbeitstakt ein Kontaktabschnitt auf das Trägerband (3) aufgeschweißt wird, wonach das Trägerband (3) in eine Position zur Aufschweißung des nächsten Kontaktabschnittes weiterverfahren wird, **dadurch gekennzeichnet, dass** je ein Kontaktabschnitt auf jeder Seite des Trägerbands (3) gleichzeitig und unmittelbar gegenüberliegend durch elektrisches Widerstandsschweißen ausschließlich mit diesem verbunden wird, indem jeweils eine Elektrode (16a, 16b) an jeweils einen Kontaktabschnitt angedrückt wird.

2. Verfahren nach Anspruch 1, **dadurch gekennzeichnet, dass** jeder Kontaktabschnitt unmittelbar vor dem Verschweißen von einem Draht oder Profil (8a, 8b) abgetrennt wird, wobei das Abtrennen des Kontaktabschnitts durch ein Trennwerkzeug erfolgt und der abgetrennte Kontaktabschnitt vorzugsweise durch einen Schieber in eine Ausnehmung der Elektrode (16a, 16b) eingeführt wird.

3. Verfahren nach Anspruch 1 oder 2, **dadurch gekennzeichnet, dass** jeder der beiden Kontaktabschnitte von einer Elektrode (16a, 16b) gehalten wird und dass die beiden Elektroden (16a, 16b) gleichzeitig von beiden Seiten zum Trägerband (3) bewegt und auf dieses gepresst werden.

4. Verfahren nach einem der Ansprüche 1 bis 3, **dadurch gekennzeichnet, dass** die Position des Trägerbands (3) zu den Elektroden (16a, 16b) durch Pilotierstifte (15) eingerichtet wird, die in Öffnungen des Trägerbands (3) eingreifen.

5. Vorrichtung zum durchführen des Verfahrens nach Anspruch 1 zum Aufschweißen von elektrischer Kontakten auf ein Trägerband (3) zur Herstellung von Kontaktelementen wobei die Vorrichtung mit einer Vorschubeinrichtung für ein Trägerband (3) und mit einer Schweißeinrichtung (4a, 4b) zum Aufschweißen von Kontaktabschnitten in einem durchgängigen Abschnitt des Trägerbandes vorgesehen ist, wobei, zwei einander gegenüberliegende Schweißeinrichtungen (4a, 4b) vorgesehen sind, zwischen denen ein Kanal (2) zur Durchführung : des Trägerbands (3) ausgebildet ist, die gleichzeitig betätigbar sind.

6. Vorrichtung nach Anspruch 5, **dadurch gekennzeichnet, dass** im Bereich der Schweißeinrichtung (4a, 4b) eine Abtrenneinrichtung vorgesehen ist, die dazu ausgebildet ist, den Kontaktabschnitt von einem Draht oder Profil (8a, 8b) abzutrennen, wobei die Abtrenneinrichtung ein Trennwerkzeug zum Abtrennen des Kontaktschnitts und vorzugsweise einen Schieber zum Transport des Kontaktabschnitts zur Elektrode (16a, 16b) umfasst.

7. Vorrichtung nach einem der Ansprüche 5 oder 6, **dadurch gekennzeichnet, dass** eine Steuerungseinrichtung zur Herstellung einer gleichzeitigen gegenläufigen Bewegung der Elektroden (16a, 16b) zum Trägerband (3) vorgesehen ist.

8. Vorrichtung nach einem der Ansprüche 5 bis 7, **dadurch gekennzeichnet, dass** im Bereich der Elektroden (16a, 16b) Pilotierstifte (15) vorgesehen sind, die die genaue Positionierung des Trägerbands (3) zu den Elektroden (16a, 16b) zu sichern, die in Öffnungen des Trägerbands (3) eingreifen.

9. Vorrichtung nach einem der Ansprüche 5 bis 8, **dadurch gekennzeichnet, dass** eine Einrichtung zur Erfassung der Einlegeposition der Kontaktabschnitte vorgesehen ist, welche Einrichtung vorzugsweise als Näherungssensor (20) ausgebildet ist, der mit einem Annäherungskörper (19) zusammenwirkt, der mit dem einzulegenden Kontaktabschnitt in Verbindung steht.

10. Vorrichtung nach einem der Ansprüche 5 bis 9, **dadurch gekennzeichnet, dass** jede Schweißeinrichtung (4a, 4b) von einem eigenen Motor (7a, 7b) angetrieben ist.

11. Vorrichtung nach einem der Ansprüche 5 bis 10, **dadurch gekennzeichnet, dass** eine elektronische Schnittstelle zur Synchronisierung mit vorgelagerten oder nachgelagerten Bearbeitungseinrichtungen vorgesehen ist.

12. Vorrichtung nach einem der Ansprüche 5 bis 11, **dadurch gekennzeichnet, dass** die zur Herstellung und zum Einlegen der Kontaktabschnitte vorgesehenen Bauteile in einer austauschbaren Kassette (5a, 5b) angeordnet sind.

## Claims

1. Method of welding electric contacts onto a carrier tape (3) for the purpose of making contact elements etc., where during each working cycle a contact section is welded onto the carrier tape (3) and the carrier tape (3) is then moved on into a position for welding on the next contact section, **characterised in that** two contact sections positioned directly opposite each other, i.e. one on either side of the carrier tape (3), are simultaneously and exclusively attached to said tape by electric resistance welding, by pressing an electrode (16a, 16b) onto each contact section.

2. Method according to claim 1, **characterised in that** each contact section is cut from a wire or profiled section (8a, 8b) immediately before the welding process, this severing of the contact section being performed by a cutting tool and the severed contact section being introduced into a recess of the electrode (16a, 16b) preferably by means of a slide.

3. Method according to claim 1 or 2, **characterised in that** each of the two contact sections is held by an electrode (16a, 16b), and that the two electrodes (16a, 16b) are moved towards the carrier tape (3) from either side at one and the same time and pressed onto said tape.

4. Method according to any of claims 1 to 3, **characterised in that** the position of the carrier tape (3) relative to the electrodes (16a, 16b) is aligned by means of pilot pins (15) engaging apertures in the carrier tape (3).

5. Device for implementing the method according to claim 1 for welding electric contacts onto a carrier tape (3) for the purpose of making contact elements, said device including a feed unit for the advancing of a carrier tape (3) and a welding unit (4a, 4b) for welding on contact sections in a continuous part of the carrier tape (3), wherein two welding units (4a, 4b) are provided opposite of each other, between which a passage (2) is provided for transporting the carrier tape (3), said welding units being simultaneously operable.

6. Device according to claim 5, **characterised in that** in the area of the welding unit (4a, 4b) there is provided a cutting device designed to cut off the contact section from a wire or profiled section (8a, 8b), said cutting device comprising a cutting tool for severing the contact section and preferably a slide for moving said contact section towards the electrode (16a, 16b).

7. Device according to any of claims 5 or 6, **characterised in that** a control unit is provided, which is designed to move the electrodes (16a, 16b) simultaneously towards the carrier tape (3) from opposite directions.

8. Device according to any of claims 5 to 7, **characterised in that** in the area of the electrodes (16a, 16b) pilot pins (15) are provided for securing accurate positioning of the carrier tape (3) relative to the electrodes (16a, 16b), said pins engaging apertures in the carrier tape (3).

9. Device according to any of claims 5 to 8, **characterised in that** a device is provided for registering the proper positioning of the contact sections, said device being preferably designed as a proximity sensor (20) which is cooperating with a proximity element (19) in contact with the contact section to be positioned.

10. Device according to any of claims 5 to 9, **characterised in that** each welding unit (4a, 4b) is driven by a separate motor (7a, 7b).

11. Device according to any of claims 5 to 10, **characterised in that** an electronic interface is provided for synchronisation with preceding or subsequent tooling devices.

12. Device according to any of claims 5 to 11, **characterised in that** the components designed for making and positioning the contact sections are provided in a replaceable cartridge (5a, 5b).

## Revendications

1. Procédé de soudage de contacts électriques sur une bande de support (3) pour la fabrication d'éléments de contact ou analogues, selon lequel pendant chaque temps de travail, on soude un segment de contact sur la bande de support (3) et ensuite, on déplace la bande de support (3) dans une position permettant de souder le segment de contact suivant,
**caractérisé en ce que**
chaque fois un segment de contact sur chaque côté de la bande de support (3) est relié simultanément et directement en face-à-face à cette bande, exclusivement par un soudage par résistance électrique en appliquant chaque fois une électrode (16a, 16b) à un segment de contact.

2. Procédé selon la revendication 1,
**caractérisé en ce que**
directement avant d'être soudé, chaque segment de contact est séparé d'un fil de profil (8a, 8b) et la séparation du segment de contact est faite par un outil de séparation puis le segment de contact une fois séparé est introduit de préférence par un tiroir dans une cavité de l'électrode (16a, 16b).

3. Procédé selon l'une quelconque des revendications 1 ou 2,
**caractérisé en ce que**
chacun des deux segments de contact est tenu par une électrode (16a, 16b) et les deux électrodes (16a, 16b) sont déplacées simultanément des deux côtés de la bande de support (3) et sont pressées contre celle-ci.

4. Procédé selon l'une quelconque des revendications 1 à 3,
**caractérisé en ce que**
la position de la bande de support (3) par rapport aux électrodes (16a, 16b) est alignée par des broches pilotes (15) pénétrant dans des ouvertures de la bande de support (3).

5. Dispositif pour la mise en oeuvre du procédé selon la revendication 1 pour souder des contacts électriques sur une bande de support (3) et réaliser des éléments de contact, ce dispositif comportant une installation d'avancée pour la bande de support (3) et une installation de soudage (4a, 4b) pour souder les segments de contact dans un segment continu de la bande de support, comprenant
deux installations de soudage (4a, 4b) qui se font face et entre lesquelles est réalisé un canal (2) pour le passage de la bande de support (3), ces deux installations étant actionnées simultanément.

6. Dispositif selon la revendication 5,
**caractérisé en ce qu'**
une installation de découpe est prévue au niveau de l'installation de soudage (4a, 4b) pour séparer le segment de contact d'un fil ou d'un profil (8a, 8b), l'installation de coupe comportant un outil de coupe pour séparer le segment de contact et de préférence, un tiroir pour transporter le segment de contact vers l'électrode (16a, 16b).

7. Dispositif selon l'une quelconque des revendications 5 ou 6,
**caractérisé par**
une installation de commande pour réaliser un mouvement simultané opposé des électrodes (16a, 16b) vers la bande de support (3).

8. Dispositif selon l'une quelconque des revendications 5 à 7,
**caractérisé en ce qu'**
au niveau des électrodes (16a, 16b), des broches pilotes (15) assurent le positionnement précis de la bande de support (3), par rapport aux électrodes (16a, 16b), en pénétrant dans les ouvertures de la bande de support (3).

9. Dispositif selon l'une quelconque des revendications 5 à 8,
**caractérisé par**
une installation pour saisir la position de mise en place des segments de contact, cette installation étant réalisée de préférence comme capteur de proximité (20) coopérant avec un organe de proximité (19) relié au segment de contact à mettre en place.

10. Dispositif selon l'une quelconque des revendications 5 à 9,
**caractérisé en ce que**
chaque installation de soudage (4a, 4b) est actionnée par son propre moteur (7a, 7b).

11. Dispositif selon l'une quelconque des revendications 5 à 10,
**caractérisé par**
une interface électronique pour la synchronisation avec des installations de travail en amont ou en aval.

12. Dispositif selon l'une quelconque des revendications 5 à 11,
**caractérisé en ce que**
les composants pour la fabrication et la mise en place des segments de contact sont prévus dans un boîtier interchangeable (5a, 5b).
